(19) Europäisches Patentamt / European Patent Office / Office européen des brevets

(11) **EP 2 821 962 A1**

(12) **EUROPEAN PATENT APPLICATION**

(43) Date of publication:
**07.01.2015 Bulletin 2015/02**

(51) Int Cl.:
**G06T 5/00** *(2006.01)*    **H04N 19/00** *(2014.01)*

(21) Application number: **13305962.6**

(22) Date of filing: **05.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventor: **Hepper, Dietmar
30419 Hannover (DE)**

(74) Representative: **Schmidt-Uhlig, Thomas
Deutsche Thomson OHG
European Patent Operations
Karl-Wiechert-Allee 74
30625 Hannover (DE)**

(54) **Method and apparatus for superimposing noise on an image sequence**

(57)    A method for superimposing noise on an image of a sequence of images and an apparatus (20) configured to perform this method are described. After receiving a user input to select (10) one of a plurality of noise profiles via an input (22) the selected noise profile is retrieved (11) from a data source (24) via a data interface (23). Parameters of the retrieved noise profile are then displayed (12) to the user via an output (25). Responsive to a user input to modify (13) one or more of the parameters of the retrieved noise profile, a processor (26) generates a modified noise profile. A noise sample generator (27) then generates (14) a noise sample in accordance with the modified noise profile, which is superimposed (15) on the image by an image processor (28).

Fig. 1

EP 2 821 962 A1

**Description**

**FIELD OF THE INVENTION**

The invention relates to a method and to an apparatus for superimposing noise on an image or images of an image sequence. More specifically, a method and an apparatus capable of superimposing noise, e.g. film grain noise, on image sequences in accordance with a chosen characteristic using an enhanced user interface are described.

**BACKGROUND OF THE INVENTION**

One task in film or video production and processing is the removal and/or superimposition of film grain noise on an image sequence. A chemical film is made of color layers, e.g. one layer for a black-and-white film or three color layers for a color film. Each layer contains color particles or grains. If a film is scanned on a film scanner, the resulting digital signal contains film grain noise, which manifests as small-scale spatio-temporal noise artifacts caused by the film grain. While the cause is spatial, the visual appearance is both spatial and temporal.

Strong film grain typically reduces visual quality. Therefore, removal or reduction is desired for quality enhancement of scanned film. Where scanned film is source encoded for compression, film grain noise reduces the coding gain. Therefore, removal or reduction of film grain noise prior to encoding is an issue, combined with simulation and addition of film grain noise in the receiver. Finally, visual film grain appearance is sometimes wanted for non-film-originating video material, or a unified film grain noise level is sought for a sequence combined from various sources containing different film grain noise levels. Therefore, there is a requirement for film grain noise removal or reduction and/or superimposition, so-called film grain management.

There are restoration tools on the market that include basic versions of film grain management, i.e. film grain noise removal and film grain noise superimposition. For superimposition artificially generated grain is often used. However, there is a lack of determining, quantifying and describing properties of film grain noise that are essential for later film grain noise superimposition yielding a natural look and feel.

In this regard US 2002/0034337 discloses a method for analyzing the broadband noise content of a digital image. Regions of originally constant color in the image are automatically identified by analysis of the variance of pixel values. Regions deemed to be unrepresentative of the true noise content are automatically detected and discarded. The selected constant color regions are analyzed in order to generate a parametric or non-parametric model of the noise in the image. However, the document only deals with single images. In addition, only a rough $2 \times 2$ sub-band analysis of the noise is performed.

US 5,641,596 describes a method for extracting and storing statistics of the grain pattern of scanned film. The statistics are representative of local, spatial, and spectral properties of a photographic grain pattern of that type of film. The statistical results are stored and used smoothing the film grain noise or for reducing its effects.

Furthermore, in the European Patent Application EP13305722.4 the generation of noise profiles from real image sequences or scanned neutral grey film is described. How to make use of such profiles for noise superimposition has been left open.

European Patent Application EP13305954.3 describes how to superimpose noise on an image or images of a sequence of images using noise profiles.

**SUMMARY OF THE INVENTION**

It is an object of the invention to provide a solution for superimposing noise on images of an image sequence using an enhanced user interface.

According to one aspect of the invention, a method for superimposing noise on an image of a sequence of images comprises the steps of:

- selecting one of a plurality of noise profiles;
- retrieving the selected noise profile from a data source;
- displaying parameters of the retrieved noise profile to a user;
- responsive to a user input, modifying one or more of the parameters of the retrieved noise profile to generate a modified noise profile;
- generating a noise sample in accordance with the modified noise profile; and
- superimposing the noise sample on the image.

Accordingly, an apparatus configured to superimpose noise on an image of a sequence of images comprises:

- an input configured to receive a user input to select one of a plurality of noise profiles;
- a data interface configured to retrieve the selected noise profile from a data source;
- an output configured to display parameters of the retrieved noise profile to a user;
- a processor configured to generate a modified noise profile responsive to a user input to modify one or more of the parameters of the retrieved noise profile,
- a noise sample generator configured to generate a noise sample in accordance with the modified noise profile; and
- an image processor configured to superimpose the noise sample on the image.

Similarly, a computer readable storage medium has stored therein instructions enabling superimposing noise on an image of a sequence of images, which when executed by a computer, cause the computer to:

- receive a user input to select one of a plurality of noise profiles;
- retrieve the selected noise profile from a data source;
- display parameters of the retrieved noise profile to the user;
- responsive to a user input, modify one or more of the parameters of the retrieved noise profile to generate a modified noise profile;
- generate a noise sample in accordance with the modified noise profile; and
- superimpose the noise sample on the image.

The solution according to the invention allows designing and/or tailoring characteristics for superimposing noise, e.g. film grain noise, on image sequences providing a natural look and feel of the superimposed noise considering a certain type of film of interest, and/or adapting the characteristics to artistic or other requirements. The solution provides an instantaneous view of the effect of a (modified) superimposition characteristic. A wide palette of superimposition characteristics and associated parameters is available and/or possible, and can transparently be associated with certain types of film, or with other, maybe artistic, aspects.

A set of classes of functions as characteristics for film grain noise superimposition on an image sequence is provided with certain parameters describing their shape. Default parameters are provided for all classes of functions. Superimposition characteristics, or rather their parameters, can be loaded from a file or saved to a file, a so-called "film grain control file", or a corresponding data set in another form of data or data format. Default or loaded characteristics can be modified and stored as new characteristics. Superimposition characteristics and their effect on the image are presented to the user by applying them to a natural image loaded at present as well as to a test image and writing/displaying the results to the user. An expert user interface shows all the data and images and allows modifying parameters. As soon as there is a change to a parameter, e.g. due to a slider movement or specification of a new value, a new look-up table with the modified signal-dependent superimposition characteristic is computed and the presented output images are updated as to present the effect to the user immediately. As an alternative, a button is provided for starting the computation.

Advantageously, the characteristics also include bandwidth characteristics of the film grain noise and specify spectral shape. In this case a menu allows specifying the spectral shape, e.g. rectangular or circular, whereas bandwidths and roll-off can be modified using sliders or number input, e.g. referring to grain size. The loaded grain samples will then be filtered with a low-pass filter designed according to these specifications.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

**BRIEF DESCRIPTION OF THE DRAWINGS**

Fig. 1    schematically illustrates a method according to the invention for superimposing noise on an image of a sequence of images;

Fig. 2    depicts an apparatus configured to implement the method of Fig. 1;

Fig. 3    depicts a graphical user interface used by a software tool implementing the method of Fig. 1; and

Fig. 4    shows an expert GUI for modifying or designing the noise superimposition characteristic.

## DETAILED DESCRIPTION OF A PREFERRED EMBODIMENT

In the following the invention shall be explained with reference to film grain noise as an example for noise in an image sequence. Of course, the invention is not limited to this type of noise. The invention can be used for superimposing any kind of noise or low-level signal component on a given image.

Generally speaking, film grain management includes two steps. The first step is noise removal from an image sequence, e.g. from an edited version made of different sequences, which potentially show different levels of film grain noise. Noise removal is advantageously achieved by spatial and/or temporal filtering. The second step is superimposing defined film grain noise of unique strength throughout the complete (edited) sequence in order to achieve a common look and feel for the complete material.

As described in EP13305954.3, the superimposition of noise, such as film grain noise, on an image or images of a sequence of images can be performed using noise profiles. Such noise profiles are preferably provided as control files or in a different form or format of data. In the following, reference is made to files for simplicity. In the case of film grain noise, for example, different film grain control files are provided, which represent different types of film. Superimposition of noise is then realized by retrieving a noise profile from a data source, generating a noise sample based on the retrieved noise profile, and superimposing the noise sample on the image.

By way of example, a film grain control file *.fgc contains the following entries:

- Version identifier
- Textual information about grain sample referring to (scanned/synthetic, etc.)
- Textual information about superimposition method
- Superimposition domain: lin or log; then for each of R, G, B:
- Superimposition characteristic in case of lin domain:

      o constant
      o linear
      o exponential
      o parabola
      o exponential and linear
      o exponential and mirrored
      o section-wise linear
      o linear and exponential
      o quadratic and exponential
      o exponential times exponential

- 2-6 parameters specifying the characteristic (referring to normalized intensity range 0...1, positive or negative)
- Bit depth originally referring to (informative)
- Overall multiplier a (e.g., 0.25; 1 = unmodified superimposition in constant case; 0 = scale to grain standard deviation; positive).

The superimposition of scanned film grain noise is controlled by parameters contained in the film grain control file (*.fgc). If such a file is not available, default parameters are favorably used. Generally several control files are provided for different film grain noise look and feel, from which the user then makes a selection.

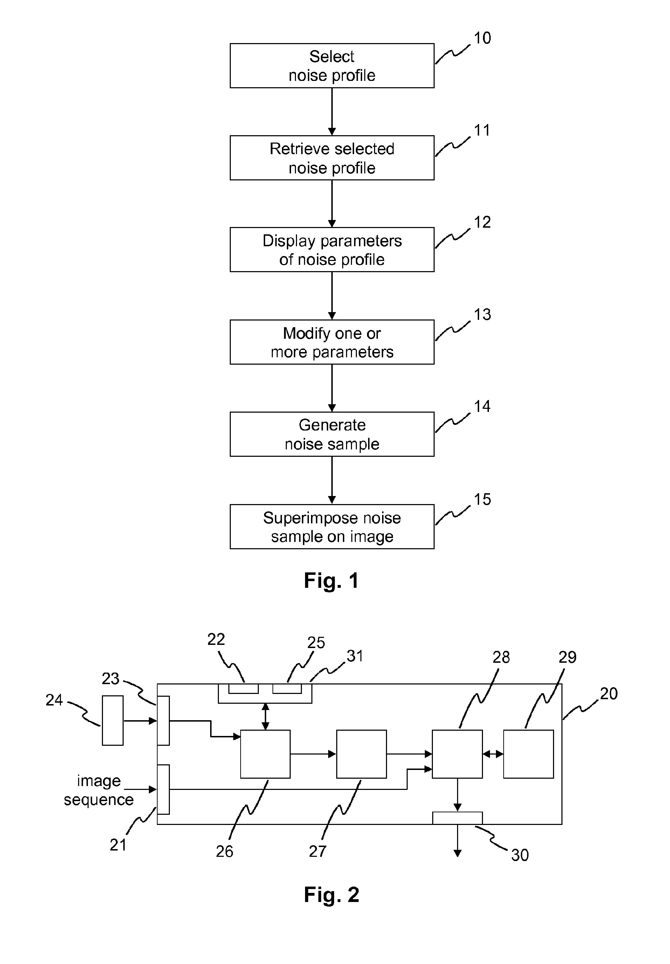

A method according to the invention for superimposing noise on an image of a sequence of images is schematically illustrated in Fig. 1. After selecting 10 one of a plurality of noise profiles, e.g. responsive to a user request or automatically upon initiating a noise superimposition tool, the selected noise profile is retrieved 11 from a data source, e.g. from a database, a network, or from a local storage. Parameters of the retrieved noise profile are then displayed 12 to a user, preferably by presenting them on a graphical user interface. Responsive to a user input, one or more of the parameters of the retrieved noise profile are modified 13 to generate a modified noise profile. Advantageously, the one or more parameters are modified using sliders, drop down menus, arrow keys, or value entry fields. Then a noise sample is generated 14 in accordance with the modified noise profile. Finally, the generated noise sample is superimposed 15 on the image.

Fig. 2 depicts an apparatus 20 configured to implement the method of Fig. 1. The apparatus 20 has an input 21 for retrieving an image sequence, e.g. from a network or from a local storage. A further input 22 allows receiving a user input to select 10 one of a plurality of noise profiles. The selected noise profile is retrieved 11 from a data source 24 via a data interface 23. The data source 24 is either included in the apparatus 20 or external to the apparatus 20. Parameters of the retrieved noise profile are displayed 12 to a user via an output 25. The input 22 and the output 25 are advantageously combined into a single user interface 31 that is presented on a display (not shown) of the apparatus 20 or provided to an external display. A processor 26 is provided, which generates a modified noise profile responsive to a user input to modify 13 one or more of the parameters of the retrieved noise profile. A noise sample generator 27 generates 14 a noise sample in accordance with the modified noise profile, which is then superimposed 15 on the image by an image processor 28. The resulting image is preferably stored in a storage unit 29 and/or provided to a network via an output 30. Of course, the input 21, the output 30, and/or the data interface 23 may be combined into a bi-directional communication interface. Also, the various units of the apparatus 20 may likewise be combined or partially combined into a single unit or implemented as software running on a processor.

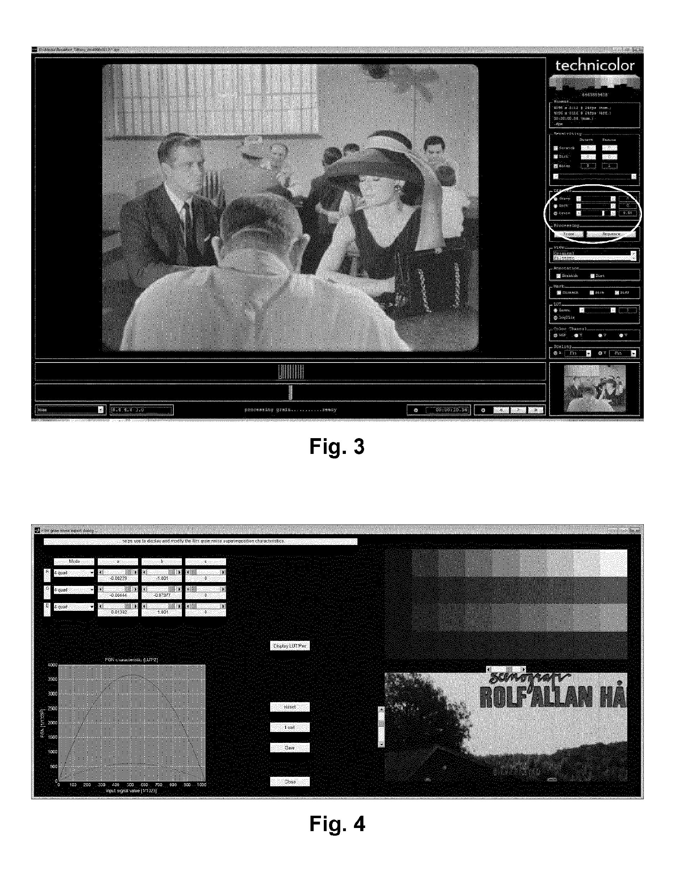

According to the present invention, special graphical user interfaces are provided for controlling the superimposition of noise. A first exemplary user interface is depicted in Fig. 3. This user interface allows controlling the level of superimposed grain, among a variety of other parameters. To this end a grain strength parameter is set in the GUI using a slider or arrow key or entering a number as shown in the right central part of the GUI highlighted by the white ellipse. Advantageously, the user further has direct control over the film grain noise samples to be used, as well as over the control file to be used.

In case of superimposition in the linear domain, the following can be controlled via the control file:

$$y = s + fac \cdot \sigma_n(s) \cdot n. \tag{1}$$

The mode of operation is controlled by a mode control parameter, while *fac* is a factor set via the GUI's film grain noise slider controlling the overall noise level. The default preferably is *fac*=1. For all of the following examples, different parameter values or even characteristics can be selected for the different color components, e.g. RGB or YUV.

In case of a constant characteristic, the zero-mean film grain noise *n* is added to the source image signal s:

$$\sigma_n^2 = a = \text{const}. \tag{2}$$

In case of a linear characteristic, the film grain noise is added after multiplication with the source image signal in order to achieve higher film grain noise amplitudes in case of light image regions compared to dark regions:

$$\sigma_n^2 = a \cdot s. \tag{3}$$

In case of an exponential characteristic, multiplication is done with an exponential function of the source signal:

$$\sigma_n^2 = a \cdot \left(1 - \exp(-b \cdot s)\right). \tag{4}$$

In case of a parabola, multiplication is done according to a parabola function of the source signal:

$$\sigma_n^2 = a \cdot \max(0, s^2 + b \cdot s + c). \tag{5}$$

In case of an exponential and linear characteristic, multiplication is done according to a combination of an exponential and a linear term:

$$\sigma_n^2 = a \cdot (1 - s)\left(1 - \exp(-b \cdot s)\right). \tag{6}$$

In case of an exponential and mirrored characteristic, multiplication is done according to exponential functions, rising for low s, falling for high s (a horizontally mirrored version of the former):

$$\sigma_n^2 = a \cdot \left(1 - \exp(-b \cdot s)\right). \qquad (7)$$

In case of a characteristic represented by three linear sections, multiplication is done according to straight lines, rising for low s, falling for high s:

$$\sigma_n^2 = \min(a \cdot s + b; c \cdot s + d; e \cdot (1 - s) + f). \qquad (8)$$

In case of a linear and exponential characteristic, multiplication is done according to a straight line with an exponential roll-off:

$$\sigma_n^2 = a \cdot s \cdot \left(1 - \exp\left(-b(1-s)\right)\right). \qquad (9)$$

In case of a quadratic and exponential characteristic, multiplication is done according to a parabola with an exponential roll-off:

$$\sigma_n^2 = a \cdot (s^2 + b \cdot s) \cdot \left(1 - \exp\left(-c \cdot (1-s)\right)\right). \qquad (10)$$

In case of a characteristic according to the product of exponential functions, multiplication is done as to achieve an exponential rising and falling including a saturation:

$$\sigma_n^2 = a \cdot \left(1 - \exp(-b \cdot s)\right) \cdot (\exp(-c \cdot s) + d). \qquad (11)$$

The specific film grain noise superimposition characteristics can be tailored by means of an experts GUI as shown in Fig. 4. The film grain noise expert GUI allows modifying or designing the film grain noise superimposition characteristic. It is preferably called from the higher application shown in Fig. 3 and contains a variety of elements. A graph displays the present characteristic of $\sigma_n^2(s)$ or $\sigma_n(s)$. An associated button "Display LUT/Pwr" allows switching between display of $\sigma_n^2(s)$ or $\sigma_n(s)$. Also shown is a test image of grey, red, green and blue patches of different signal intensity with superimposed film grain noise according to the present characteristic. Arranged below the test image is a section of the natural image loaded and processed in the higher application with superimposed film grain noise according to the present characteristic. As the expert GUI is preferably called from the higher application, it favorably obtains the image from the higher application. Advantageously, the section of the natural image has the same size as the test image. Sliders near the section of the natural image control selection of the section for display. In order to modify the parameter values of the characteristic for each of the color components or channels R, G, B, dedicated sliders are provided for each parameter. Also provided are drop-down menus "mode" for selecting the class of function individually for R, G, B, a button "Reset" for resetting the characteristic to the one last loaded or saved, a button "Save" for saving the present characteristic in an .fgc file, and a button "Close" for closing the expert GUI without involving a save operation and returning to the calling application. Activation of the "Save" button will open a typical menu for file specification.

If the natural image is sufficiently small to fit in the expert GUI horizontally and/or vertically, the natural image is displayed in its complete width and/or height and the respective slider or the two sliders are omitted.

Advantageously, tool tips are available that display explaining text about the depicted elements, e.g. about a button, when moving the pointer of a mouse or other pointing device over the element.

Whenever a parameter value is changed or another class of function is selected, a new look-up table for use for film grain noise superimposition is computed and the diagram and the images displayed are updated using the new characteristic, thus letting the user always instantaneously see the effect of his or her choice.

Although the invention has been described hereinabove with reference to a specific embodiment, it is not limited to this embodiment and no doubt further alternatives will occur to the skilled person that lie within the scope of the invention as claimed.

**Claims**

1.  A method for superimposing noise on an image of a sequence of images, the method **comprising** the steps of:

    - selecting (10) one of a plurality of noise profiles;
    - retrieving (11) the selected noise profile from a data source;
    - displaying (12) parameters of the retrieved noise profile to a user;
    - responsive to a user input, modifying (13) one or more of the parameters of the retrieved noise profile to generate a modified noise profile;
    - generating (14) a noise sample in accordance with the modified noise profile; and
    - superimposing (15) the noise sample on the image.

2.  The method according to claim 1, **wherein** the noise is film grain noise.

3.  The method according to claim 1 or 2, **further** comprising the steps of:

    - superimposing (15) the noise sample on a test image and/or a section of the image; and
    - displaying the test image and/or the section of the image to the user.

4.  The method according to one of the preceding claims, **wherein** the parameters comprise a multiplier controlling an overall noise level and/or parameters of functions describing noise superimposition characteristics.

5.  The method according to one of the preceding claims, **wherein** individual parameters are provided for each channel of the image.

6.  The method according to claim 5, **wherein** the image channels are RGB or YUV channels.

7.  The method according to one of the preceding claims, **wherein** the noise sample in accordance with the modified noise profile is generated (14) automatically or responsive to a user input.

8.  The method according to one of the preceding claims, **further** comprising the step of displaying a noise superimposition characteristic associated to the noise profile or the modified noise profile as a graph to the user.

9.  The method according to claim 8, **wherein** the noise superimposition characteristic in accordance with the modified noise profile parameters is displayed automatically or responsive to a user input.

10. The method according to one of the preceding claims, **further** comprising the step of storing the modified noise profile.

11. The method according to one of the preceding claims, **wherein** the one or more parameters are modified using sliders, arrow keys, numerical keys, drop down menus, value entry fields, or any other graphical or any other input means.

12. An apparatus (20) configured to superimpose noise on an image of a sequence of images, the apparatus (20) **comprising:**

    - an input (22) configured to receive a user input to select (10) one of a plurality of noise profiles;
    - a data interface (23) configured to retrieve (10) the selected noise profile from a data source (24);
    - an output (25) configured to display (12) parameters of the retrieved noise profile to a user;
    - a processor (26) configured to generate a modified noise profile responsive to a user input to modify (13) one or more of the parameters of the retrieved noise profile;

- a noise sample generator (27) configured to generate (14) a noise sample in accordance with the modified noise profile; and
- an image processor (28) configured to superimpose (15) the noise sample on the image.

**13.** A computer readable storage medium having stored therein instructions enabling superimposing noise on an image of a sequence of images, which when executed by a computer, cause the computer to:

- receive a user input to select (10) one of a plurality of noise profiles;
- retrieve (11) the selected noise profile from a data source;
- display (12) parameters of the retrieved noise profile to the user;
- responsive to a user input, modify (13) one or more of the parameters of the retrieved noise profile to generate a modified noise profile;
- generate (14) a noise sample in accordance with the modified noise profile; and
- superimpose (15) the noise sample on the image.

```
                    ┌─────────────────┐
                    │     Select      │ ⌇ 10
                    │  noise profile  │
                    └─────────────────┘
                             │
                             ▼
                    ┌─────────────────┐
                    │ Retrieve selected│ ⌇ 11
                    │  noise profile  │
                    └─────────────────┘
                             │
                             ▼
                    ┌─────────────────┐
                    │Display parameters│ ⌇ 12
                    │ of noise profile │
                    └─────────────────┘
                             │
                             ▼
                    ┌─────────────────┐
                    │  Modify one or  │ ⌇ 13
                    │ more parameters │
                    └─────────────────┘
                             │
                             ▼
                    ┌─────────────────┐
                    │    Generate     │ ⌇ 14
                    │  noise sample   │
                    └─────────────────┘
                             │
                             ▼
                    ┌─────────────────┐
                    │Superimpose noise│ ⌇ 15
                    │ sample on image │
                    └─────────────────┘
```

**Fig. 1**

**Fig. 2**

Fig. 3

Fig. 4

Europäisches
Patentamt
European
Patent Office
Office européen
des brevets

**EUROPEAN SEARCH REPORT**

Application Number

EP 13 30 5962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/082649 A1 (GOMILA CRISTINA [US] ET AL) 20 April 2006 (2006-04-20) * abstract; figures 1-4 * * paragraph [0015] - paragraph [0056] * ----- | 1-13 | INV. G06T5/00 H04N7/26 |
| X | WO 2004/105250 A2 (THOMSON LICENSING SA [FR]; GOMILA CRISTINA [US]; KOBILANSKY ALEXANDER) 2 December 2004 (2004-12-02) * abstract; figures 1-3 * * page 3, line 13 - line 32 * * page 4, line 7 - page 14, line 8 * ----- | 1-13 | |
| A | CHRISTINA GOMILA ET AL: "SEI message for film grain encoding", JOINT VIDEO TEAM (JVT) OF ISO/IEC MPEG & ITU-T VCEG(ISO/IEC JTC1/SC29/WG11 AND ITU-T SG16 Q6), XX, XX, 23 May 2003 (2003-05-23), pages 1-14, XP002308742, * the whole document * ----- | 1-13 | |
| A | US 2008/088857 A1 (ZIMMER MARK [US] ET AL) 17 April 2008 (2008-04-17) * the whole document * ----- | 1-13 | TECHNICAL FIELDS SEARCHED (IPC) G06T H04N |
| A | BYUNG TAE OH ET AL: "Advanced Film Grain Noise Extraction and Synthesis for High-Definition Video Coding", IEEE TRANSACTIONS ON CIRCUITS AND SYSTEMS FOR VIDEO TECHNOLOGY, IEEE SERVICE CENTER, PISCATAWAY, NJ, US, vol. 19, no. 12, December 2009 (2009-12), pages 1717-1729, XP011281921, ISSN: 1051-8215, DOI: 10.1109/TCSVT.2009.2026974 * the whole document * ----- | 1-13 | |

The present search report has been drawn up for all claims

| Place of search | Date of completion of the search | Examiner |
|---|---|---|
| Munich | 12 December 2013 | Herter, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 13 30 5962

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2013

| Patent document cited in search report | Publication date | Patent family member(s) | Publication date |
|---|---|---|---|
| US 2006082649 A1 | 20-04-2006 | BR PI0516614 A | 16-09-2008 |
| | | CA 2583156 A1 | 27-04-2006 |
| | | CN 101044510 A | 26-09-2007 |
| | | EP 1803094 A1 | 04-07-2007 |
| | | HK 1104365 A1 | 05-10-2012 |
| | | JP 4696121 B2 | 08-06-2011 |
| | | JP 2008517530 A | 22-05-2008 |
| | | KR 20070067225 A | 27-06-2007 |
| | | RU 2378697 C2 | 10-01-2010 |
| | | US 2006082649 A1 | 20-04-2006 |
| | | US 2010080455 A1 | 01-04-2010 |
| | | WO 2006044260 A1 | 27-04-2006 |
| | | ZA 200703153 A | 27-08-2008 |
| WO 2004105250 A2 | 02-12-2004 | AU 2004240456 A1 | 02-12-2004 |
| | | AU 2004241535 A1 | 02-12-2004 |
| | | AU 2010202031 A1 | 10-06-2010 |
| | | BR PI0410320 A | 23-05-2006 |
| | | BR PI0410383 A | 04-07-2006 |
| | | CA 2525937 A1 | 02-12-2004 |
| | | CA 2526016 A1 | 02-12-2004 |
| | | CN 1788281 A | 14-06-2006 |
| | | CN 1791891 A | 21-06-2006 |
| | | CN 101350891 A | 21-01-2009 |
| | | EP 1627359 A2 | 22-02-2006 |
| | | EP 1627360 A1 | 22-02-2006 |
| | | HK 1087232 A1 | 10-10-2008 |
| | | JP 4919804 B2 | 18-04-2012 |
| | | JP 4960703 B2 | 27-06-2012 |
| | | JP 2007514336 A | 31-05-2007 |
| | | JP 2007515846 A | 14-06-2007 |
| | | JP 2010206808 A | 16-09-2010 |
| | | JP 2011071998 A | 07-04-2011 |
| | | JP 2012124952 A | 28-06-2012 |
| | | KR 20050121757 A | 27-12-2005 |
| | | KR 20060015725 A | 20-02-2006 |
| | | MX PA05012294 A | 31-05-2006 |
| | | MX PA05012295 A | 31-05-2006 |
| | | MY 145597 A | 29-02-2012 |
| | | RU 2377652 C2 | 27-12-2009 |
| | | RU 2010102017 A | 27-07-2011 |
| | | US 2006256873 A1 | 16-11-2006 |
| | | WO 2004104931 A1 | 02-12-2004 |
| | | WO 2004105250 A2 | 02-12-2004 |
| | | ZA 200509227 A | 30-05-2007 |
| | | ZA 200509231 A | 28-11-2007 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 13 30 5962

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2013

| Patent document cited in search report | Publication date | Patent family member(s) | Publication date |
|---|---|---|---|
| US 2008088857 A1 | 17-04-2008 | US 2008088857 A1<br>US 2010271505 A1 | 17-04-2008<br>28-10-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020034337 A
- US 5641596 A
- EP 13305722 A
- EP 13305954 A